# EUROPÄISCHE PATENTSCHRIFT

(11) **EP 3 168 567 B1**
(45) Veröffentlichungstag und Bekanntmachung des Hinweises auf die Patenterteilung: **25.04.2018**
(21) Anmeldenummer: 16197881.2
(22) Anmeldetag: 09.11.2016
(51) Int. Cl.: F42B 10/14, F42B 10/62, F42B 10/48

(54) **UNBEMANNTER FLUGKÖRPER**
UNMANNED MISSILE
MISSILE SANS ÉQUIPAGE

(30) Priorität: 10.11.2015 DE 102015014520
(43) Veröffentlichungstag der Anmeldung: 17.05.2017
(73) Patentinhaber: MBDA Deutschland GmbH, 86529 Schrobenhausen (DE)
(72) Erfinder: MAIER, Franz, 83075 Bad Feilnbach, Au (DE)
(74) Vertreter: Isarpatent

(56) Entgegenhaltungen:
- WO-A1-2008/010226
- DE-A1- 4 021 633
- US-A- 5 615 846
- US-A1- 2010 282 917
- US-B1- 8 444 082

## Beschreibung

### TECHNISCHES GEBIET

Die vorliegende Erfindung betrifft einen unbemannten Flugkörper mit einem Rumpf und zumindest einer am Rumpf um zumindest eine Tragflügelschwenkachse schwenkbar gelagerten Tragflügeleinrichtung gemäß dem Oberbegriff des Patentanspruchs 1.

### HINTERGRUND DER ERFINDUNG

Von der Infanterie mitgeführte unbemannte Flugkörper dienen entweder zu Aufklärungszwecken oder unmittelbar zur Zielbekämpfung. Diese Flugkörper müssen einerseits klein, kompakt und leicht sein, damit sie beispielsweise in einem Rucksack von der Truppe mitgeführt werden können, und andererseits müssen sie eine ausreichende Reichweite aufweisen, damit sie bei einer Aufklärungsmission wieder zum Startort zurückkehren können.

### STAND DER TECHNIK

Zur Erfüllung dieser Anforderungen sind bekannte derartige unbemannte Kleinflugkörper mit schwenkbaren Tragflächen versehen, die für den Transport am Rumpf anliegen und die für den Flug ausgeschwenkt werden. Solche Flugkörper kennt man etwa aus der US 2010/028917.

Bekannt ist auch das tragbare unbemannte Fluggerät "Switchblade" des USamerikanischen Herstellers AeroVironment. Es ist als Tiefdecker mit vorderen und hinteren Tragflächen ausgestaltet und kann aus einem Startkanister heraus gestartet werden. Nachteil dieses bekannten Kleinfluggeräts ist das Fehlen einer skid-to-turn-Fähigkeit, was besonders im Ziel-Endanflug nachteilig ist und zu Trefffehlern führen kann.

### DARSTELLUNG DER ERFINDUNG

Aufgabe der vorliegenden Erfindung ist es, einen gattungsgemäßen unbemannten Kleinflugkörper zu schaffen, der einerseits möglichst kompakt ist und wenig Packvolumen im Startrohr benötigt und der andererseits eine gute Manövrierfähigkeit besitzt und eine geringe Fluggeschwindigkeit im Beobachtungsmodus ermöglicht.

Diese Aufgabe wird gelöst durch einen unbemannten Flugkörper mit den Merkmalen des Patentanspruchs 1.

Bei dem erfindungsgemäßen unbemannten Flugkörper, der versehen ist mit einem Rumpf und zumindest einer am Rumpf um zumindest eine Tragflügelschwenkachse schwenkbar gelagerten Tragflügeleinrichtung, weist die zumindest eine schwenkbare Tragflügeleinrichtung eine erste Tragfläche und eine von dieser in Richtung der Gierachse beabstandete zweite Tragfläche auf und zwischen dem freien Ende der ersten Tragfläche und dem freien Ende der zweiten Tragfläche erstreckt sich zumindest eine Verbindungsfläche, mit der die jeweiligen freien Enden der Tragflächen miteinander verbunden oder verbindbar sind.

Dabei ist die Tragflügelschwenkachse in der Mitte der ersten Tragfläche und der zweiten Tragfläche sowie im Bereich der Längsmitte des Rumpfes angeordnet und es ist an jedem der freien Enden der Tragflächen eine Verbindungsfläche vorgesehen, die das zugehörige freie Ende der ersten Tragfläche mit dem zugehörigen freien Ende der zweiten Tragfläche verbindet, wobei der Abstand zwischen den beiden Verbindungsflächen größer ist als die Länge des Rumpfes, so lässt sich die gesamte Tragflügelanordnung um den Rumpf herum an dessen Oberseite und an dessen Unterseite so anordnen, dass in kompaktes Packmaß erzielt wird.

### VORTEILE

Die erfindungsgemäße Ausgestaltung schafft eine Doppeldeckeranordnung, die zusammen mit den Verbindungsflächen eine kastenförmige Tragflächenanordnung bildet. Die Doppeldeckeranordnung bewirkt eine Verdopplung der Flügelfläche bei gleicher Spannweite. Diese Ausführung der Tragflügeleinrichtung als Doppeldecker mit vorzugsweise senkrechten Verbindungsflächen gewährleistet eine große Auftriebswirkung und damit gute Langsamflugeigenschaften. Die Endscheiben für die einzelnen Tragflächen bildenden Verbindungsflächen verbessern nicht nur diese Langsamflugeigenschaften, sondern auch die Manövrierfähigkeit. Das Ausklappen der Flügel aus dem Lagerzustand erfolgt durch einfache Drehbewegung. Im Transportzustand mit eingeschwenkter Tragflügeleinrichtung weist der gesamte Flugkörper ein geringes Packmaß auf und ist in einem Rucksack unterbringbar.

Das Kastenprofil der Tragflügeleinrichtung schafft eine große mechanische Stabilität der Flügel durch einen geschlossenen Kasten, dadurch kann die Tragflügeleinrichtung leichter gebaut werden. Die senkrechten Endflächen der Tragflügeleinrichtung verringern den induzierten Widerstand, erhöhen den Auftrieb und erlauben skid-to-turn-Manöver (seitliches Manövrieren ohne Rollbewegung). Dies bewirkt nicht nur eine bessere Trefferleistung, sondern sorgt auch für kein verrolltes Kamerabild.

Vorteilhafterweise weisen die erste, obere Tragfläche und die zweite, untere Tragfläche jeweils einen backbordseitigen Tragflächenabschnitt und einen steuerbordseitigen Tragflächenabschnitt auf, wobei die backbordseitigen Tragflächenabschnitte über zumindest eine Backbord-Verbindungsfläche und die steuerbordseitigen Tragflächenabschnitte über zumindest eine Steuerbord-Verbindungsfläche miteinander verbunden oder verbindbar sind.

Zum Manövrieren kann der Flugkörper beispielsweise mit vier Klapprudern versehen sein, wie sie bei Flugkörpern zur Steuerung der Nick-, Roll- und Gier-Bewegung üblich sind.

Weitere bevorzugte und vorteilhafte Ausgestaltungsmerkmale des erfindungsgemäßen unbemannten Flugkörpers sind Gegenstand der Unteransprüche 2 bis 10.

Vorzugsweise ist die erste Tragfläche an einer Oberseite des Rumpfes schwenkbar gelagert und die zweite Tragfläche ist an einer Unterseite des Rumpfes schwenkbar gelagert.

Vorteilhaft ist es auch, wenn der Abstand von der Tragflügelschwenkachse bis zur Verbindungsfläche größer ist als der Abstand von der Tragflügelschwenkachse zu einem Ende des Rumpfes. Das ermöglicht es, die Tragflügelanordnung in eine Lage zu schwenken, in der die Tragflächen die Oberseite und die Unterseite des Rumpfes zumindest teilweise bedecken.

Von Vorteil ist es dabei weiter, wenn die Tragflügeleinrichtung um 90° aus der Verpackungsposition in die Betriebsposition schwenkbar ist.

Vorteilhafterweise ist der Rumpf mit elastisch verbiegbaren, klappbaren oder zusammenfaltbaren Steuerflächen versehen.

Vorzugsweise ist der Flugkörper mit zumindest einer Antriebseinrichtung versehen. Dabei ist es von Vorteil, wenn die zumindest eine Antriebseinrichtung einen von einem Motor antreibbaren Propeller aufweist. Besonders vorteilhaft ist es, wenn der Propeller elastisch verbiegbare oder klappbare Propellerblätter aufweist. Ein vorzugsweise vorgesehener Elektroantrieb mit beispielsweise einklappbaren, verstellbaren Propellern sorgt für den Antrieb. Eine Schubumkehr durch Drehrichtungsumkehr des Antriebes oder durch Verstellpropeller ermöglicht Senkrechtstart und Senkrechtlandung.

Ist die Antriebseinrichtung an einem Ende des Rumpfes angeordnet und ist der Abstand von der Schwenkachse bis zur Verbindungsfläche zwischen den beiden Tragflächen größer als der Abstand von der Schwenkachse zum Ende der Antriebseinrichtung, so kann auch die Antriebseinrichtung bei in der Transport- oder Verpackungsposition befindlicher Tragflügeleinrichtung abgedeckt werden.

In einer anderen vorteilhaften Ausführungsform der Erfindung ist jeweils eine Antriebseinrichtung an einer der die freien Enden der ersten und der zweiten Tragfläche verbindenden Verbindungsflächen angeordnet, wobei die jeweilige Antriebseinrichtung vorzugsweise um eine zur Gierachse parallele Antriebsschwenkachse schwenkbar gelagert ist. Hierdurch kann eine Schubvektorsteuerung des Flugkörpers realisiert werden.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- **Fig. 1**: einen erfindungsgemäßen unbemannten Flugkörper in der Draufsicht;
- **Fig. 2**: den unbemannten Flugkörper aus Fig. 1 in der Frontansicht gemäß Pfeil II in Fig. 1;
- **Fig. 3**: den unbemannten Flugkörper in der Seitenansicht gemäß Pfeil III in Fig. 1, allerdings mit in die Transportposition verschwenkter Tragflügeleinrichtung;
- **Fig. 4**: eine erste Variante des erfindungsgemäßen unbemannten Flugkörpers mit einer kastenförmig ausgebildeten schwenkbar gelagerten Tragflügeleinrichtung;
- **Fig. 5**: einen unbemannten Flugkörper mit einer horizontal geteilten kastenförmigen Tragflügeleinrichtung und

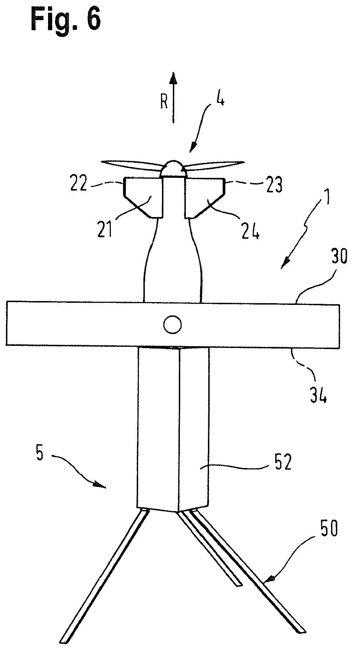

- **Fig. 6**: einen startbereit in einer Startrampe stehenden unbemannten Flugkörper gemäß der Erfindung.

### DARSTELLUNG VON BEVORZUGTEN AUSFÜHRUNGSBEISPIELEN

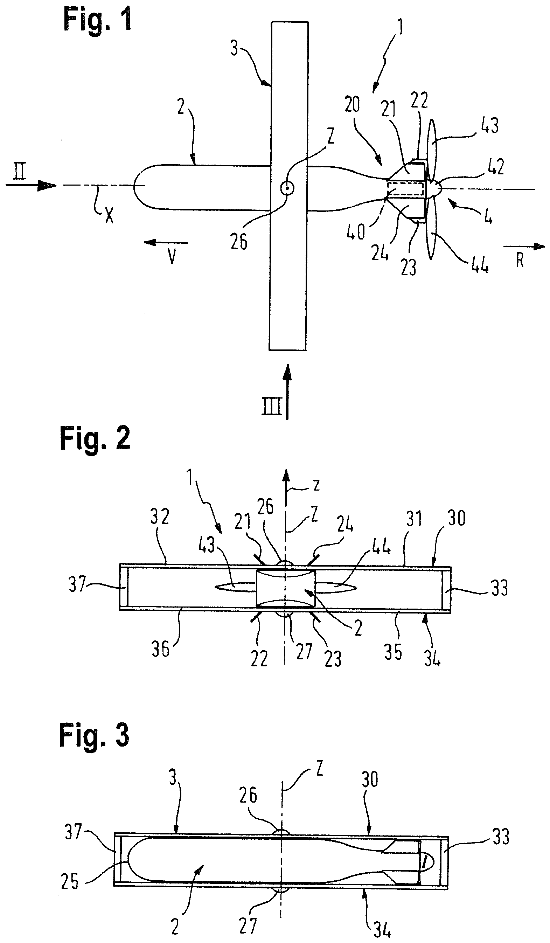

Der in Fig. 1 in der Draufsicht gezeigte unbemannte Flugkörper 1 weist einen Rumpf 2 und eine kastenförmige Tragflügeleinrichtung 3 auf, die um eine in der Längsmitte gelegene vertikale Schwenkachse Z aus einer Transportstellung (Fig. 3) in eine Betriebsstellung (Fig. 1 und 2) verschwenkbar ist. Der Rumpf 2 ist im Bereich des Hecks mit vier jeweils rechtwinklig zueinander am Rumpfheck 20 angebrachten Steuerflächen 21, 22, 23, 24 versehen. Die Funktion und Wirkungsweise der Steuerflächen von unbemannten Flugkörpern sind allgemein bekannt.

Am heckseitigen Ende des Rumpfes 2 ist der Flugkörper 1 mit einer Antriebseinrichtung 4 versehen. Die Antriebseinrichtung 4 umfasst einen im Rumpfheck 20 angeordneten Motor 40, beispielsweise einen Elektromotor, der von einer (nicht gezeigten) Batterie im Rumpf 2 gespeist wird. Der Motor 40 ist über eine (nicht gezeigte) Antriebswelle mit einer Propellernabe 42 zur Übertragung des vom Motor 40 erzeugten Drehmoments auf die Propellernabe 42 verbunden. An der Propellernabe 42 sind zwei oder mehr Propellerblätter 43, 44 angebracht, die zusammen mit der vom Motor 40 angetriebenen Propellernabe 42 rotieren und eine Schubkraft in Axialrichtung des Rumpfes 2 (Rumpflängsachse X) erzeugen. Durch Drehrichtungsumkehr des Motors 40 oder durch Verstellung des Anstellwinkels der Propellerblätter 43, 44 kann die Wirkrichtung der vom Antrieb auf den Flugkörper 1 aufgebrachten Antriebskraft von einem Vorwärtsbetrieb (Pfeil V) zu einem Rückwärtsbetrieb (Pfeil R) gewechselt werden.

In Fig. 2 ist deutlich zu erkennen, dass die Tragflügeleinrichtung 3 als Doppeldecker-Kastenprofil ausgebildet ist. Dazu weist die Tragflügeleinrichtung 3 eine erste obere Tragfläche 30 und eine zweite, untere Tragfläche 34 auf, die um ein an der Rumpfoberseite vorgesehenes oberes Schwenklager 26 beziehungsweise um ein an der Rumpfunterseite vorgesehenes unteres Schwenklager 27 um die parallel zur Gierachse z verlaufende Schwenkachse Z verschwenkbar sind.

Die obere Tragfläche 30 besteht aus einem backbordseitigen oberen Tragflächenabschnitt 31 und einem steuerbordseitigen oberen Tragflächenabschnitt 32. Die untere Tragfläche 34 besteht aus einem backbordseitigen unteren Tragflächenabschnitt 35 und einem steuerbordseitigen unteren Tragflächenabschnitt 36.

Die freien Enden der backbordseitigen Tragflächenabschnitte 31, 35 sind über eine Backbord-Verbindungsfläche 33 miteinander verbunden und die steuerbordseitigen Tragflächenabschnitte 32, 36 sind über eine Steuerbord-Verbindungsfläche 37 miteinander verbunden. Auf diese Weise bilden die obere Tragfläche 30, die untere Tragfläche 34 und die beiden Verbindungsflächen 33, 37 ein Doppeldecker-Kastenprofil.

Fig. 3 zeigt den Flugkörper 1 mit einer in die Transportposition verschwenkten Tragflügeleinrichtung 3. Die obere Tragfläche 30 erstreckt sich nun in Längsrichtung entlang der Oberseite des Rumpfes 2 und die untere Tragfläche 34 erstreckt sich in Längsrichtung entlang der Unterseite des Rumpfes 2. Die Backbord-Verbindungsfläche 33 liegt nun hinter der am Rumpfheck 20 vorgesehenen Propellernabe 42 und die Steuerbord-Verbindungsfläche 37 befindet sich vor der Bugnase 25 des Rumpfes 2. Sowohl die Steuerflächen 21, 22, 23, 24 als auch die Propellerblätter 43, 44 sind in der in Fig. 3 gezeigten Position in eine am Rumpfheck 20 anliegende Transportposition geklappt.

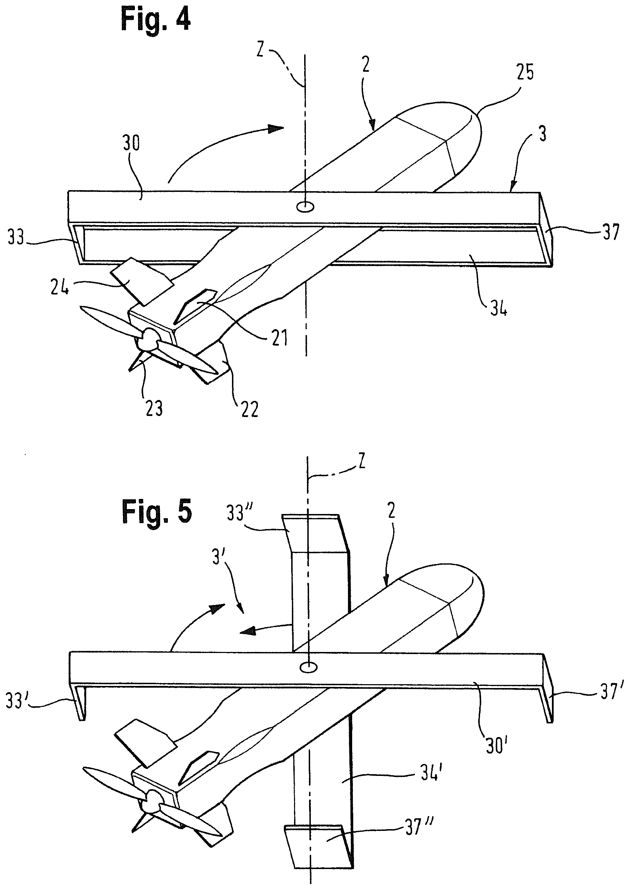

Fig. 4 zeigt in einer perspektivischen Darstellung den Übergang des Flugkörpers 1 aus der in Fig. 3 gezeigten Transportposition in die in Fig. 1 gezeigte Einsatz- oder Betriebsposition. Dazu wir die kastenförmig ausgebildete Tragflügeleinrichtung 3 um die Tragflügelschwenkachse Z in Richtung des in Fig. 4 gezeigten Pfeils (zum Beispiel im Uhrzeigersinn) geschwenkt. Sobald die Steuerflächen 21, 22, 23, 24 und die Propellerblätter 43, 44 durch das Verschwenken der kastenförmigen Tragflügeleinrichtung 3 freigegeben worden sind, entfalten sich diese in ihre vom Rumpf beziehungsweise von der Propellernabe abstehende Betriebsposition, wie sie in Fig. 4 dargestellt ist. Die Tragflügeleinrichtung 3 wird gegenüber der in Fig. 3 gezeigten Transportposition um 90 ° verschwenkt, um dann die in Fig. 1 dargestellte Betriebsposition zu erreichen.

Ein alternativer Aufbau der Tragflügeleinrichtung 3' ist in Fig. 5 dargestellt. Dort ist die obere Tragfläche 30' an ihrem backbordseitigen freien Ende mit einer vorzugsweise senkrecht nach unten weisenden backbordseitigen ersten Verbindungsfläche 33' und an ihrem steuerbordseitigen freien Ende mit einer vorzugsweise rechtwinklig nach unten weisenden steuerbordseitigen ersten Verbindungsfläche 37' versehen. Die untere Tragfläche 34' ist an ihrem backbordseitigen freien Ende mit einer vorzugsweise senkrecht nach oben weisenden zweiten backbordseitigen Verbindungsfläche 33" und an ihrem steuerbordseitigen freien Ende mit einer vorzugsweise senkrecht nach oben weisenden zweiten steuerbordseitigen Verbindungsfläche 37" versehen.

Im Transportzustand sind die obere Tragfläche 30' und die untere Tragfläche 34' entsprechend dem in Fig. 3 gezeigten Beispiel in Rumpflängsrichtung angeordnet. Verschwenkt werden die beiden Tragflächen 30', 34' jedoch nicht, wie in Fig. 4 dargestellt ist, gemeinsam in eine Richtung (beispielsweise im Uhrzeigersinn wie in Fig. 4), sondern die beiden Tragflächen 30', 34' werden gegenläufig verschwenkt, wie an den Pfeilen in Fig. 5 zu erkennen ist. Diese Variante besitzt den Vorteil, dass sich die beim Verschwenken der Tragflächen 30', 34' gegenüber dem Rumpf 2 auftretenden Schwenkmomente (Rotationsmomente um die Schwenkachse Z) gegeneinander aufheben. Im Betriebszustand stehen die beiden Tragflächen 30', 34' (wie im Beispiel der Fig. 1 und 2) übereinander im rechten Winkel zur Rumpflängsachse X. Die jeweiligen backbordseitigen Verbindungsflächen 33', 33" und auch die jeweiligen steuerbordseitigen Verbindungsflächen 37', 37" können einander überlappen und bei Bedarf nach dem Verschwenken durch einen (nicht gezeigten) Mechanismus miteinander verbunden werden, so dass auch hier ein stabiles Kastenprofil entsteht.

In Fig. 5 ist eine Startvorrichtung 5, welche vorteilhafterweise auch als Lager- und Transportbehälter für den Flugkörper 1 dient, gezeigt, die ein auf einem Dreibeinstativ 50 stehendes Startrohr 52 aufweist. In das Startrohr 52 ist von oben der Rumpf 2 des Flugkörpers 1 mit der Bugnase 25 voran eingeführt und der Flugkörper 1 stützt sich mit der Vorderkante der Tragflächen 30, 34 am oberen Rand des Startrohrs 52 ab. Die am Rumpfheck 20 angeordnete und als Propellerantrieb ausgebildete Antriebseinheit 4 zeigt dabei nach oben.

Wird die Antriebseinheit 4 nun in dem bereits geschilderten Rückwärtsflug-Modus betrieben, bewegt sich der Flugkörper 1 in Richtung des Pfeils R in Rückwärtsbewegung aus dem Startrohr 52 nach oben heraus.

Sobald der Flugkörper eine ausreichende Höhe über Grund erreicht hat, wird der Antrieb auf den bereits beschriebenen Vorwärtsflug-Modus umgeschaltet und der Flugkörper 1 wird mittels der entsprechend eingestellten Steuerflächen 21, 22, 23, 24 abgefangen und in den horizontalen Vorwärtsflug überführt. Daraufhin kann die Marschflugphase des Flugkörpers 1 beginnen.

In dieser Marschflugphase kann der Flugkörper 1 entweder eine Aufklärungsmission fliegen und zum Startplatz zurückkehren oder er kann eine in ein Ziel führende Bekämpfungsmission fliegen. Durch das Vorsehen der kastenförmigen Tragflügeleinrichtung nach Art eines Doppeldeckers wird der aerodynamische Auftrieb des Flugkörpers gegenüber einem Eindecker deutlich erhöht und damit die Reichweite des Flugkörpers deutlich verbessert.

Anstelle der am Rumpfheck 20 vorgesehenen Antriebseinrichtung 4 können auch jeweils eine (nicht in den Figuren dargestellte) Antriebseinrichtung an einer der die freien Enden der ersten und der zweiten Tragfläche 30, 34; 30', 34' verbindenden Verbindungsflächen 33, 37; 33', 33"; 37'; 37" angebracht sein. Dabei ist es vorteilhaft, wenn die jeweilige Antriebseinrichtung um eine zur Gierachse z parallele Antriebsschwenkachse schwenkbar gelagert ist.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

### Es bezeichnen:

- 1: Flugkörper
- 2: Rumpf
- 3: Tragflügeleinrichtung
- 3': Tragflügeleinrichtung
- 4: Antriebseinrichtung
- 20: Rumpfheck
- 21: Steuerfläche
- 22: Steuerfläche
- 23: Steuerfläche
- 24: Steuerfläche
- 25: Bugnase
- 26: oberes Schwenklager
- 27: unteres Schwenklager
- 30: obere Tragfläche
- 30': obere Tragfläche
- 31: backbordseitiger oberer Tragflächenabschnitt
- 32: steuerbordseitiger oberer Tragflächenabschnitt
- 33: Backbord-Verbindungsfläche
- 33': backbordseitige erste Verbindungsfläche
- 33": backbordseitige zweite Verbindungsfläche
- 34: untere Tragfläche
- 34': untere Tragfläche
- 35: backbordseitiger unterer Tragflächenabschnitt
- 36: steuerbordseitiger unterer Tragfiächenabschnitt
- 37: Steuerbord-Verbindungsfläche
- 37': steuerbordseitige erste Verbindungsfläche
- 37": steuerbordseitige zweite Verbindungsfläche
- 40: Motor
- 41: Propeller
- 42: Propellernabe
- 43: Propellerblatt
- 44: Propellerblatt
- 50: Dreibeinstativ
- 52: Startrohr
- X: Rumpflängsachse
- Z: Tragflügelschwenkachse
- z: Gierachse

## Patentansprüche

1. Unbemannter Flugkörper (1) mit einem Rumpf (2) und zumindest einer am Rumpf (2) um zumindest eine Tragflügelschwenkachse (Z) schwenkbar gelagerten Tragflügeleinrichtung (3),
wobei die zumindest eine schwenkbare Tragflügeleinrichtung (3) eine erste Tragfläche (30; 30') und eine von dieser in Richtung der Gierachse (z) beabstandete zweite Tragfläche (34; 34') aufweist und
wobei sich zwischen dem freien Ende der ersten Tragfläche (30; 30') und dem freien Ende der zweiten Tragfläche (34; 34') zumindest eine Verbindungsfläche (33, 37; 33', 33"; 37'; 37") erstreckt, mit der die jeweiligen freien Enden der Tragflächen (30, 34; 30', 34') miteinander verbunden oder verbindbar sind,
**dadurch gekennzeichnet,**
**dass** die Tragflügelschwenkachse (Z) in der Längsmitte der ersten Tragfläche (30; 30') und der zweiten Tragfläche (34; 34') sowie im Bereich der Längsmitte des Rumpfes (2) angeordnet ist,
**dass** an jedem der freien Enden der Tragflächen (30, 34) eine Verbindungsfläche (33, 37) vorgesehen ist, die das zugehörige freie Ende der ersten Tragfläche (30) mit dem zugehörigen freien Ende der zweiten Tragfläche (34) verbindet, und
**dass** der Abstand zwischen den beiden Verbindungsflächen (30, 37) größer ist als die Länge des Rumpfes (2).

2. Unbemannter Flugkörper nach Anspruch 1,
**dadurch gekennzeichnet,**
**dass** die erste Tragfläche (30; 30') an einer Oberseite des Rumpfes (2) schwenkbar gelagert ist und dass die zweite Tragfläche (34; 34') an einer Unterseite des Rumpfes (2) schwenkbar gelagert ist.

3. Unbemannter Flugkörper nach Anspruch 1 oder 2,
**dadurch gekennzeichnet,**
**dass** der Abstand von der Tragflügelschwenkachse (Z) bis zur Verbindungsfläche (33, 37; 33', 33"; 37'; 37") größer ist als der Abstand von der Tragflügelschwenkachse (Z) zu einem Ende des Rumpfes (2).

4. Unbemannter Flugkörper nach einem der vorhergehenden Ansprüche,
**dadurch gekennzeichnet,**
**dass** die Tragflügeleinrichtung (3) vorzugsweise um 90° schwenkbar ist.

5. Unbemannter Flugkörper nach einem der vorhergehenden Ansprüche,
**dadurch gekennzeichnet,**
**dass** der Rumpf (2) mit elastisch verbiegbaren, klappbaren oder zusammenfaltbaren Steuerflächen (21, 22, 23, 24) versehen ist.

6. Unbemannter Flugkörper nach einem der vorhergehenden Ansprüche,
**dadurch gekennzeichnet,**
**dass** der Flugkörper mit zumindest einer Antriebseinrichtung (4) versehen ist.

7. Unbemannter Flugkörper nach Anspruch 6,
**dadurch gekennzeichnet,**
**dass** die zumindest eine Antriebseinrichtung (4) einen von einem Motor (40) antreibbaren Propeller (41) aufweist.

8. Unbemannter Flugkörper nach Anspruch 7,
**dadurch gekennzeichnet,**
**dass** der Propeller (41) elastisch verbiegbare oder klappbare Propellerblätter (43, 44) aufweist.

9. Unbemannter Flugkörper nach einem der Ansprüche 6 bis 8,
**dadurch gekennzeichnet,**
**dass** die Antriebseinrichtung (4) an einem Ende des Rumpfes (2) angeordnet ist und
**dass** der Abstand von der Tragflügelschwenkachse (Z) bis zur Verbindungsfläche (33, 37; 33', 33"; 37'; 37") zwischen den beiden Tragflächen (30, 34; 30', 34') größer ist als der Abstand von der Tragflügelschwenkachse (Z) zum Ende der Antriebseinrichtung (4).

10. Unbemannter Flugkörper nach einem der Ansprüche 6 bis 8,
**dadurch gekennzeichnet,**
**dass** jeweils eine Antriebseinrichtung an einer der die freien Enden der ersten und der zweiten Tragfläche (30, 34; 30', 34') verbindenden Verbindungsflächen (33, 37; 33', 33"; 37'; 37") angeordnet ist, wobei die jeweilige Antriebseinrichtung vorzugsweise um eine zur Gierachse (z) parallele Antriebsschwenkachse schwenkbar gelagert ist.

## Claims

1. Unmanned missile (1) having a fuselage (2) and at least one wing device (3) that is mounted on the fuselage (2) in such a manner that said wing device may pivot about at least one wing pivot axis (Z),
wherein the at least one wing device (3) that may pivot comprises a first wing (30; 30') and a second wing (34; 34') that is spaced from said first wing in the direction of the yaw axis (z) and
wherein at least one connecting surface (33, 37; 33', 33"; 37'; 37") extends between the free end of the first wing (30; 30') and the free end of the second wing (34; 34') and the respective free ends of the wings (30, 34; 30', 34') are connected or may be connected to one another using said connecting surface,
**characterised in**
**that** the wing pivot axis (Z) is arranged in the longitudinal centre of the first wing (30, 30') and the second wing (34; 34') and also in the region of the longitudinal centre of the fuselage (2),
**that** a connecting surface (33, 37) is provided on each of the free ends of the wings (30, 34), said connecting surface connecting the associated free end of the first wing (30) to the associated free end of the second wing (34), and
**that** the distance between the two connecting surfaces (30, 37 is larger than the length of the fuselage (2).

2. Unmanned missile according to claim 1,
**characterised in**
**that** the first wing (30; 30') is mounted in such a manner that it may pivot on an upper side of the fuselage (2) and that the second wing (34; 34) is mounted in such a manner that it may pivot on an underside of the fuselage (2) .

3. Unmanned missile according to claim 1 or 2,
**characterised in**
**that** the distance from the wing pivot axis (Z) to the connecting surface (33, 37; 33', 33"; 37':37") is larger than the distance from the wing pivot axis (Z) to an end of the fuselage (2).

4. Unmanned missile according to any one of the preceding claims,
**characterised in**
**that** the wing device (3) may pivot preferably about 90°.

5. Unmanned missile according to any one of the preceding claims,
**characterised in**
**that** the fuselage (2) is provided with control surfaces (21, 22, 23, 24) that may be bent in an elastic manner, may be folded up or may be folded together.

6. Unmanned missile according to any one of the preceding claims,
**characterised in**
**that** the missile is provided with at least one drive device (4).

7. Unmanned missile according to claim 6,
**characterised in**
**that** the at least one drive device (4) comprises a propeller (41) that may be driven by a motor (40).

8. Unmanned missile according to claim 7,
**characterised in**
**that** the propeller (41) comprises propeller blades (43, 44) that may be bent in an elastic manner or may be folded up.

9. Unmanned missile according to any one of the claims 6 to 8,
**characterised in**
**that** the drive device (4) is arranged on an end of the fuselage (2) and
**that** the distance from the wing pivot axis (Z) to the connecting surface (33, 37; 33', 33"; 37'; 37") between the two wings (30, 34; 30' 34') is larger than the distance from the wing pivot axis (Z) to the end of the drive device (4).

10. Unmanned missile according to any one of the claims 6 to 8,
**characterised in**
**that** in each case a drive device is arranged on one of the connecting surfaces (33, 37, 33', 33"; 37'; 37") that connect the free ends of the first and the second wing (30, 34; 30', 34'), wherein the respective drive device is preferably mounted in such a manner that it may pivot about a drive pivot axis that is parallel to the yaw axis (z) .

## Revendications

1. Missile sans pilote (1) comportant un fuselage (2) et au moins un dispositif de voilure (3) monté pivotant autour d'au moins un axe de pivotement de voilure au niveau du fuselage (Z),
dans lequel l'au moins un dispositif de voilure (3) pivotant présente une première surface portante (30 ; 30') et une deuxième surface portante (34, 34') écartée de celle-ci dans la direction de l'axe de lacet (z) et
dans lequel au moins une surface de liaison (33, 37 ; 33', 33" ; 37' ; 37") s'étend entre l'extrémité libre de la première surface portante (30 ; 30') et l'extrémité libre de la deuxième surface portante (34 ; 34'), avec laquelle les extrémités libres respectives des surfaces portantes (30, 34 ; 30', 34') sont reliées ou peuvent être reliées l'une à l'autre,
**caractérisé**
**en ce que** l'axe de pivotement de voilure (Z) est disposé au centre longitudinal de la première surface portante (30 ; 30') et de la deuxième surface portante (34 ; 34') ainsi qu'au niveau du centre longitudinal du fuselage (2),
**en ce qu'**au niveau de chacune des extrémités libres des surfaces portantes (30, 34) une surface de liaison (33, 37) est prévue, laquelle relie l'extrémité libre associée de la première surface portante (30) à l'extrémité libre associée de la deuxième surface portante (34), et
**en ce que** l'écartement entre les deux surfaces de liaison (30, 37) est plus grand que la longueur du fuselage (2) .

2. Missile sans pilote selon la revendication 1,
**caractérisé**
**en ce que** la première surface portante (30 ; 30') est montée pivotante au niveau d'un côté supérieur du fuselage (2) et en ce que la deuxième surface portante (34 ; 34') est montée pivotante au niveau d'un côté inférieur du fuselage (2).

3. Missile sans pilote selon la revendication 1 ou 2,
**caractérisé**
**en ce que** l'écartement de l'axe de pivotement de voilure ailes porteuses (Z) de la surface de liaison (33, 37 ; 33', 33", 37' ; 37") est plus grand que l'écartement de l'axe de pivotement de voilure (Z) d'une extrémité du fuselage (2).

4. Missile sans pilote selon l'une des revendications précédentes,
**caractérisé**
**en ce que** le dispositif de voilure (3) peut être pivoté de préférence de 90°.

5. Missile sans pilote selon l'une des revendications précédentes,
**caractérisé**
**en ce que** le fuselage (2) est muni de surfaces de commande (21, 22, 23, 24) élastiquement pliables, rabattables ou repliables.

6. Missile sans pilote selon l'une des revendications précédentes,
**caractérisé**
**en ce que** le missile est muni d'au moins un dispositif d'entraînement (4).

7. Missile sans pilote selon la revendication 6,
**caractérisé**
**en ce que** l'au moins un dispositif d'entraînement (4) présente une hélice (41) pouvant être entraînée par un moteur (40).

8. Missile sans pilote selon la revendication 7,
**caractérisé**
**en ce que** l'hélice (41) présente des pales d'hélice (43, 44) élastiquement pliales ou rabattables.

9. Missile sans pilote selon l'une des revendications 6 à 8, **caractérisé**
**en ce que** le dispositif d'entraînement (4) est disposé au niveau d'une extrémité du fuselage (2) et
**en ce que** l'écartement de l'axe de pivotement de voilure (Z) de la surface de liaison (33, 37 ; 33', 33", 37' ; 37") entre les deux surfaces portantes (30, 34 ; 30', 34') est plus grand que l'écartement de l'axe de pivotement de voilure (Z) de l'extrémité du dispositif d'entraînement (4).

10. Missile sans pilote selon l'une des revendications 6 à 8,
**caractérisé**
**en ce que** respectivement un dispositif d'entraînement est disposé à une des surfaces de liaison (33, 37 ; 33', 33" ; 37' ; 37") reliant les extrémités libres de la première et de la deuxième surface portante (30, 34 ; 30', 34'), le dispositif d'entraînement respectif étant de préférence monté pivotant autour d'un axe de pivotement d'entraînement parallèle à l'axe de lacet (z).
